# EUROPEAN PATENT APPLICATION

(11) **EP 3 992 266 A1**
(43) Date of publication of application: **04.05.2022**
(21) Application number: 20204803.9
(22) Date of filing: 29.10.2020
(51) Int. Cl.: C10K 3/00, C01B 3/36

(54) **TORREFACTION GAS PROCESSING UNIT**

(71) Applicant: RWE Generation NL B.V., 4931 NC Geertruidenberg (NL)
(72) Inventor: Eurlings, Johannes Theodorus Gerardus Marie, 6125 RC Obbicht (NL)
(74) Representative: Keenway Patentanwälte Neumann Heine Taruttis

(57) **Abstract**

The torrefaction gas processing unit 400 allows the chemical recycling of torrefaction gas 202 produced by the torrefaction e.g. from solid recovered fuel (SRF) pellets 117 without the need to burn the torrefaction gas 202.

## Description

Subject mater of the present invention is method for processing a torrefaction gas, preferably generated in the torrefaction of solid recovered fuel pellets generated from municipal solid waste, and a respective torrefaction gas processing unit.

Torrefaction is a process frequently used e.g. for processing biomass. The torrefaction gas generated during the torrefaction process is presumably always burned completely to release the chemical bound energy as thermal energy.

This is disadvantageous, as the exhaust gases generated by the burning of the torrefaction gases needs to be treated extensively. Furthermore, it is, thus, not possible to use the torrefaction gas for chemical recycling.

Therefore, it is an object of the invention to improve the disadvantages of the prior art approaches.

This object is solved by the method according to the present invention as well as the torrefaction gas processing unit according to the present invention. Respective dependent claims are directed to embodiments of the invention.

According to the method for processing a torrefaction gas according to the present invention the torrefaction gas is substochiometrically oxidized with an oxygen rich gas and a fuel gas generating a syngas.

The term oxygen-rich gas is to be understood throughout this document as a gas comprising at least 95 Vol.-% [Volume-%] oxygen, preferably at least 98 Vol.-%, in particular 99.5 Vol.-% and more oxygen (O₂). By the substochiometric oxidization of the torrefaction gas larger hydrocarbons originating from the torrefaction gas and/or the fuel gas are thermally cracked and transformed into a syngas comprising carbon monoxide, carbon dioxide, hydrogen, and water. This means the present invention is directed to the chemical recycling of torrefaction gases instead of burning the torrefaction gas. This increases the sustainability of the torrefaction process.

As a fuel gas preferably natural gas and/or on site fuel gas is used. A fuel gas comprises at least one of methane, ethane, nitrogen, and hydrogen. So called on-site fuel gas is e.g. generated in steam crackers. Preferably, the torrefaction gas originates from the torrefaction from solid recovered fuel pellets generated from solid waste comprising municipal waste and, preferably, biomass. The torrefaction gas processing unit allows the sustainable processing of municipal solid waste instead of incinerating or landfilling the same. It improves the yield of chemical recycling of municipal solid waste significantly.

According to an embodiment the syngas is quenched by bringing the syngas in contact with a recycled syngas stream having a temperature smaller than the syngas.

The temperature difference between the recycled syngas acting as quench gas and the syngas is preferably significantly, at least 750°C, in particular at least 1000°C or even at least 1200°C.The quenching results in the solidification of any melted or partly solid solids which might be entrained into the torrefaction processing unit with the torrefaction gases.

According to an embodiment, the quenched syngas is provided to a heat recovery system, in which at least one of the following heat transfers is performed:
a) heating a thermal carrier, in particular a thermal oil;
b) generating high pressure steam from boiler feed water; and
c) superheating low-pressure steam.

This allows to use the heat produced by the oxidization of the torrefaction gas efficiently. Preferably, all options a) to c) are present, preferably in the order a), b), and c). This means, preferably, the quenched syngas is used first to heat the thermal carrier, second to generate high-pressure steam and, finally, third superheating low-pressure steam. This ensures a high efficient use of the thermal energy of the quenched syngas.

According to an embodiment the quenched syngas is cleaned in a wet scrubbing system. In the wet scrubbing system solids and halogens such as chlorides are removed from the quenched syngas.

According to an embodiment a first part of the cleaned syngas is used as the recycled syngas. The cleaned syngas reduces the load of pollutants on the quenched syngas and reduces the risk of corrosion in the heat recovery system. Further, the high moisture content of the cleaned syngas increases the heat capacity and increases the efficiency of the quenching process.

According to an embodiment a remaining part of the cleaned syngas is brought into contact with water for cooling and washing to reduce the water content in the cleaned syngas as the moisture in the cleaned syngas condenses.

Further, a method for processing a torrefaction gas generated by the torrefaction of solid recovered fuel pellets, preferably generated from municipal waste and, possibly, biomass, wherein the torrefaction gas is processed according to the present invention. This allows the chemical recycling of municipal waste.

Further, a torrefaction gas processing unit is proposed, comprising a burning chamber having a first inlet for introducing an oxygen rich gas stream a second inlet for introducing a fuel gas, and a third inlet for introducing the torrefaction gas, wherein the burning chamber is suited and intended for a substochiometric oxidization of the fuel gas and the torrefaction gas generating a syngas. Preferably, the torrefaction gas according to the present invention is used to perform the torrefaction gas processing according to the method according to the present invention.

According to an embodiment, the burning chamber is in fluid connection with a mixing chamber via a burning chamber exit, wherein the mixing chamber comprises a quench zone with inlets for providing a recycled syngas for quenching the syngas.

According to an embodiment the mixing chamber is in fluid connection with a heat recovery system, comprising at least one of the following heat exchangers:
a) a first heat exchanger for heat exchange between the quenched syngas and a heat carrier;
b) a second heat exchanger for heat exchange between the quenched syngas and boiler feed water; and
c) a superheater for superheating a low-pressure water steam by the quenched syngas.

According to an embodiment the heat recovery system is in fluid connection with a wet scrubbing system for cleaning the syngas exiting the heat recovery system.

According to an embodiment the torrefaction gas processing unit further comprises a water washing cooling column which is in fluid connection with the wet scrubbing system for cooling and washing the cleaned syngas downstream of the wet scrubbing system. Here, the moisture in the cleaned syngas is condensed and, thus, removed from the cleaned syngas.

According to an embodiment a sump of the water washing cooling column is in fluid connection with a heat pump. The heat of the used washing water extracted from the sump is preferably used in the heat pump to generate low pressure steam with a pressure of at most 4 bar.

Furthermore, a plant for conversing solid recovered fuel pellets to a product gas stream comprising hydrogen is proposed, including a torrefaction unit which is in fluid connection to a torrefaction gas processing unit according to the present invention for processing the torrefaction gas generatable by the torrefaction unit.

According to an embodiment the torrefaction gas processing unit can be used according to the method for processing a torrefaction gas according to the present invention.

It should be noted that the individual features specified in the claims may be combined with one another in any desired technologically reasonable manner and form further embodiments of the invention. The specification, in particular taken together with the figures, explains the invention further and specifies particularly preferred embodiments of the invention. Particularly preferred variants of the invention and the technical field will now be explained in more detail with reference to the enclosed figures. It should be noted that the exemplary embodiment shown in the figures is not intended to restrict the invention. The figures are schematic and may not be to scale. The figures display:
- Fig. 1: a plant for conversing solid waste into a gas comprising hydrogen including a carbon monoxide shift unit; and
- Fig. 2: a torrefaction gas processing unit.

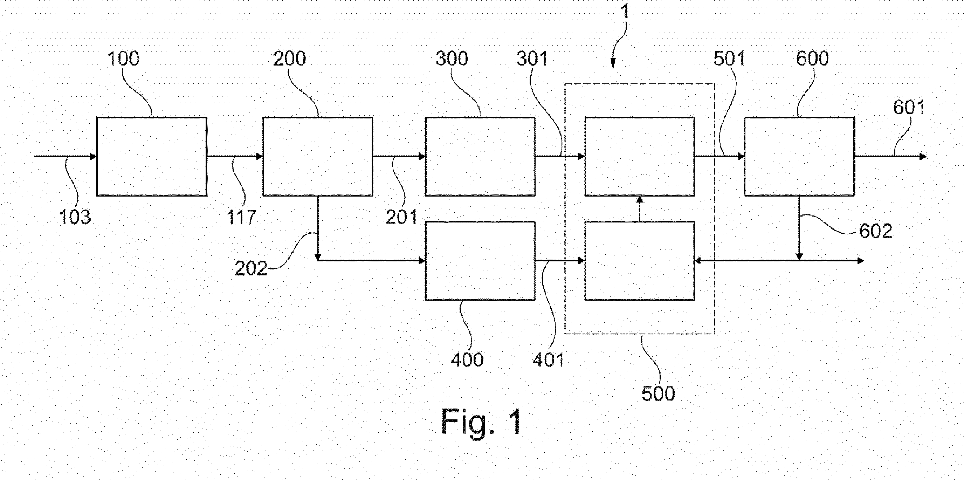

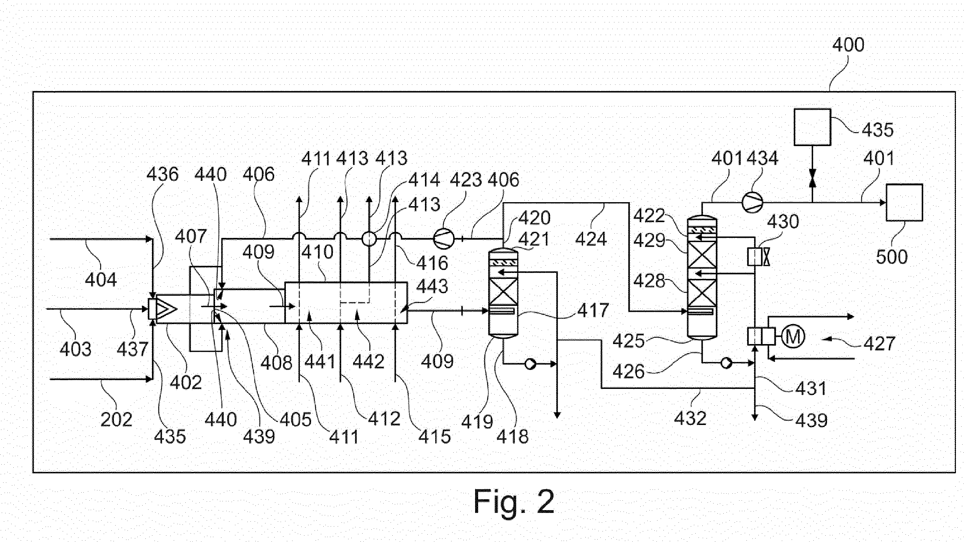

Fig. 1 displays schematically a plant 1 for conversing solid waste into a gas comprising hydrogen. After preparing pellets from solid waste like municipal solid waste 103 and/or biomass in a in pelletizing facility 100 the respective pellets 117 are transported to the plant 1 and are provided to a torrefaction unit 200 in which the pellets are oxidized substoichiometrically at temperatures of 250 to 300°C. The torrefaction of the pellets results in charred pellets 201, which are gasified in a gasifying unit 300. Another product of the torrefaction is torrefaction gas 202 which is provided to a torrefaction gas processing unit 400 which is described in detail with reference to Fig. 2 below. The product both of the torrefaction gas processing unit 400 and the gasifying unit 300 is a syngas 301, 401 comprising water steam, carbon monoxide and hydrogen. Both syngases 301, 401 are introduced into the CO shift unit 500. Shifted syngas 501 which is generated in the CO shift unit 500 is transferred to a gas cleaning unit 600 which separates hydrogen 601 from a purge gas 602. The pelletizing facility 100 is preferably off-site, i.e. situated not in the same location than the plant 1 for conversing solid waste into a gas comprising hydrogen.

Fig. 2 displays the torrefaction gas processing unit 400. Torrefaction gas 202 produced in the torrefaction unit 200 is introduced into a burning chamber 402. Furthermore, a fuel gas 403 and an oxygen rich gas stream 404 are introduced into the burning chamber 402. As the fuel gas 403 a natural gas and/or site fuel gas is used. The oxygen rich gas stream 404 comprises at least 95 Vol.-% [Volume-%] oxygen, preferably at least 98 Vol.-%, in particular 99.5 Vol.-% and more. In particular, if the gasification unit 300 is using a parallel entrained flow gasification pure oxygen is readily available. The burning chamber 402 has a first inlet 436 for introducing the oxygen rich gas stream 404, a second inlet 437 for introducing the fuel gas, and a third inlet 438 for introducing the torrefaction gas 202.

In the burning chamber 402 a substochiometric oxidization takes place by which larger hydrocarbon molecules which originate from the torrefaction gases 202 and/or the fuel gas 403 are thermally cracked and transformed into a syngas 407 comprising carbon monoxide (CO), carbon dioxide (CO₂), hydrogen (H₂), and water (H₂O). Due to the high moisture content of typically at least 50 % of the torrefaction gases 202 the generation of elementary carbon and, thus, soot is suppressed.

The temperature in the burning chamber 402 is in the range of 1000°C to 1200°C. After passing a burning chamber exit 405 the syngas 407 is quenched with recycled syngas 406 acting as quench gas to a temperature of 730°C to 770°C, preferably to a temperature of 740°C to 760°C, in particular of about 750°C. The syngas 407 is introduced into a mixing chamber 408 in which the quenching process and the accompanying mixing with the recycled syngas 406 is taking place resulting in a quenched syngas 409 which is cooling down in the mixing chamber 408. The quenching is performed in a quench zone 439 having inlets 440 for the recycled syngas 406. The effect of the quenching process, i.e. of the abrupt reduction of temperature due to the introduction of the cooler recycled syngas 406 is that any solids or melted solids being present in the syngas 407 are solidified. These solids can be introduced together with the torrefaction gas 202. Both the burning chamber 202 and the mixing chamber 408 are internally insulated and uncooled.

Downstream of the mixing chamber 408 the quenched syngas 409 is introduced into a heat recovery system 410 in which thermal energy or heat energy of the quenched syngas 409 is transferred to a thermal carrier 411, preferably a thermal oil, in a first heat exchanger 441. Downstream of the energy transfer to the thermal carrier 411 further thermal energy is transferred to boiler feed water 412 in a second heat exchanger 442 producing high-pressure steam 413 at least a part of which is transferred via a fourth heat exchanger 414 to heat the recycled syngas 406, preferably to a temperature of more than 200°C, in particular to about 225°C. In the heat recovery system 410 in a superheater 443 downstream the second heat exchange exchanger 441 with the boiler feed water 412 further thermal energy from the quenched syngas 409 is transferred to a low-pressure steam 415 to superheat the same generating superheated low-pressure steam 416. The thermal carrier is heated e.g. from a temperature of 300°C to a temperature of 400°C and can be used, e.g. for an indirect heating of the torrefaction unit 200. The high-pressure steam 413 has e.g. a pressure of 140 bar and a temperature of 350°C when leaving the heat recovery system 410. The superheated low-pressure steam has a temperature of about 275°C when leaving the heat recovery system 410 and is preferably used in the torrefaction process in the torrefaction unit 200. The quenched syngas 409 leaves the heat recovery system 410 with a temperature of about 170°C and more to avoid the formation of ammonium chloride (NH₄Cl) which causes corrosion and/or fouling. To ensure that the temperature of about 170°C is not undershot the boiler feed water 412 is introduced into the heat recovery system 410 of 140°C and more.

Downstream of the heat recovery system 410 the quenched syngas 409 is introduced into a wet scrubbing system 417 to remove solids and halogens (mainly chlorides). The wet scrubbing system 417 is a common wet scrubbing column. Used washing water 418 is bled from a sump 419 of the wet scrubbing system 417. The used washing water 418 is transferred to a wastewater treatment facility (not shown) to be recycled. A cleaned syngas 420 is exiting the wet scrubbing system 417 a head 421 of the wet scrubbing system 417. A first part of the cleaned syngas 420 is used as the recycled syngas 406 and is as described above reheated and used in the quenching of the syngas 407. The use of the cleaned syngas 420 as the recycled syngas 406 reduces the concentrations of pollutants (like, e.g. solids, halogens, in particular chlorides) in the quenched syngas 409 and avoids damages, in particular corrosion, of the heat exchange surfaces in the heat recovery system, in particular a corrosion of the surfaces used to superheat the low-pressure steam 415 to the superheated low-pressure steam 416 is avoided. Simultaneously the high moisture content of 60 vol.-% -% and more increases the heat capacity of the recycled syngas 406 and, consequently, the cooling efficiency during the quenching process. The recycled syngas 406 is compressed by a compressor 423.

A second - i.e. the remaining - part 424 of the cleaned syngas 420 is introduced into a two stage water washing cooling column 422. Due to the close contact with the colder water in the column 422 the moisture in the syngas 424 is condensing. The respective condensing heat warms the washing water in the column 422. Washing water 426 from a sump 425 is provided to a heat pump 427 for cooling e.g. from a temperature of about 85°C down to a temperature of 75°C. In the heat pump 427 low pressure steam is produced which is preferably used in the torrefaction unit 200 for process control. Most of the washing water 426 is introduced centrally in the column 422 being distributed both in a first stage 428 and a second stage 429 of the column 422. A smaller part of the washing water 426 is further cooled by an air cooler 430, preferably to temperatures of about 25°C resulting in a temperature of the syngas 424 to a temperature of about 30°C when leaving the column 422. The cooling of the syngas 422 removes about 60% of the mass as water. The excess washing water 431 is partly used as make up water 432 for the wet scrubbing system 417. Excess washing water 431 can be guided as bleed water 433 to a stripper system (not shown) in which gases are stripped from the bleed water 433, in particular ammonia (NH₃), carbon dioxide (CO₂) and hydrogen sulfide (H₂S) are stripped from the bleed water 433.

A syngas conveying means 434, preferably a fan or a blower, is used to convey syngas 401 exiting the column 422 to the CO shift unit 500 (see Fig. 1) and/or to a flare 435. The syngas conveying means 434 creates an underpressure which pulls the quenched syngas 406 through the heat recovery system 410.

The torrefaction gas processing unit 400 allows the chemical recycling of torrefaction gas 202 produced by the torrefaction e.g. from solid recovered fuel (SRF) pellets 117 without the need to burn the torrefaction gas 202.

### Reference numerals

- 1: plant for conversing solid waste
- 100: pelletizing facility
- 103: municipal solid waste
- 117: pellets
- 200: torrefaction unit
- 201: charred pellets
- 202: torrefaction gas
- 300: gasification unit
- 301: syngas
- 400: torrefaction gas processing unit
- 401: syngas
- 402: burning chamber
- 403: fuel gas
- 404: oxygen rich gas stream
- 405: burning chamber exit
- 406: recycled syngas
- 407: syngas
- 408: mixing chamber
- 409: quenched syngas
- 410: heat recovery system
- 411: thermal carrier
- 412: boiler feed water
- 413: high-pressure steam
- 414: fourth heat exchanger
- 415: low-pressure steam
- 416: superheated low-pressure steam
- 417: wet scrubbing system
- 418: used washing water
- 419: sump
- 420: cleaned syngas
- 421: head
- 422: two stage water washing cooling column
- 423: compressor
- 424: remaining part of the cleaned syngas
- 425: sump
- 426: washing water
- 427: heat pump
- 428: first stage
- 429: second stage
- 430: air cooler
- 431: excess washing water
- 432: make up water
- 433: bleed water
- 434: syngas conveying means
- 435: flare
- 436: first inlet
- 437: second inlet
- 438: third inlet
- 439: quench zone
- 440: quench zone inlet
- 441: first heat exchanger
- 442: second heat exchanger
- 443: superheater
- 500: CO shift unit
- 501: shifted syngas
- 600: gas cleaning unit
- 601: product gas rich in hydrogen
- 602: purge gas

## Claims

1. Method for processing a torrefaction gas (202), in which the torrefaction gas (202) is substochiometrically oxidized with an oxygen rich gas (404) and a fuel gas (403) generating a syngas (407, 401).

2. Method according to claim 1, wherein the syngas (407) is quenched by bringing the syngas (407) in contact with a recycled syngas (406) stream having a temperature smaller than the syngas (407).

3. Method according to claim 2, wherein the quenched syngas (406) is provided to a heat recovery system (410), in which at least one of the following heat transfers is performed:
a) heating a thermal carrier (411);
b) generating high pressure steam (413) from boiler feed water (412); and
c) superheating low-pressure steam (415).

4. Method according to claim 2 or 3, wherein the quenched syngas (409) is cleaned in a wet scrubbing system (417).

5. Method according to claim 4, wherein a first part of the cleaned syngas (420) is used as the recycled syngas (406).

6. Method according to claim 4 or 5, wherein a remaining part (424) of the cleaned syngas (420) is brought into contact with water for cooling and washing.

7. Method for processing a torrefaction gas (202) generated by the torrefaction of solid recovered fuel pellets (117), wherein the torrefaction gas (202) is processed according to one of the preceding claims.

8. Torrefaction gas processing unit (400), comprising a burning chamber (402) having a first inlet (436) for introducing an oxygen rich gas stream (404), a second inlet (437) for introducing a fuel gas (402), and a third inlet (438) for introducing the torrefaction gas (202), wherein the burning chamber (402) is suited and intended for a substochiometric oxidization of the fuel gas (403) and the torrefaction gas (202) generating a syngas (407, 401).

9. Torrefaction gas processing unit (400) according to claim 8, wherein the burning chamber (402) is in fluid connection with a mixing chamber (408) via a burning chamber exit (405), wherein the mixing chamber (408) comprises a quench zone (439) with inlets (440) for providing a recycled syngas (406) for quenching the syngas (407).

10. Torrefaction gas processing unit (400) according to claim 9, wherein the mixing chamber (408) is in fluid connection with a heat recovery system (410), comprising at least one of the following heat exchangers:
a) a first heat exchanger (441) for heat exchange between the quenched syngas (409) and a heat carrier (411);
b) a second heat exchanger (442) for heat exchange between the quenched syngas (409) and boiler feed water (412); and
c) a superheater (443) for superheating a low-pressure water steam (415) by the quenched syngas (409).

11. Torrefaction gas processing unit (400) according to claim 10, wherein the heat recovery system (410) is in fluid connection with a wet scrubbing system (417) for cleaning the syngas (409) exiting the heat recovery system (410).

12. Torrefaction gas processing unit (400) according to claim 11, further comprising a water washing cooling column (422) which is in fluid connection with the wet scrubbing system (417) for cooling and washing the cleaned syngas (420) downstream of the wet scrubbing system (417).

13. Torrefaction gas processing unit (400) according to claim 12, wherein a sump (419) of the water washing cooling column (422) is in fluid connection with a heat pump (427).

14. Plant (1) for conversing solid recovered fuel pellets (117) to a product gas stream comprising hydrogen (601), including a torrefaction unit (200) which is in fluid connection to a torrefaction gas processing unit (400) according to one of claims 8 to 13 for processing the torrefaction gas (202) generatable by the torrefaction unit (200).

15. Plant according to claim 14, wherein the torrefaction gas processing unit (400) can be used according to one of claims 1 to 6.
